# DEMANDE DE BREVET EUROPEEN

(11) **EP 4 825 718 A1**
(43) Date de publication de la demande: **21.10.2026**
(21) Numéro de dépôt: 26171507.2
(22) Date de dépôt: 09.04.2026
(51) Int. Cl.: B62M 1/28, B62J 25/04, B62J 45/413, B62J 45/421, B62K 3/06, B62K 3/16, B62M 6/50, B62M 6/65

(54) **VÉLO À ASSISTANCE ÉLECTRIQUE COMPRENANT DES PÉDALES SOLIDAIRES EN DÉPLACEMENT ET COUPLÉES AU CADRE DU VÉLO PAR UNE LIAISON PIVOT**

(30) Priorité: 15.04.2025 FR 2504012
(71) Demandeur: Denajar, Gabriel, 44810 Héric (FR); Denajar, Marlène, 44810 Héric (FR)
(72) Inventeur: Denajar, Gabriel, 44810 Héric (FR); Denajar, Marlène, 44810 Héric (FR)
(74) Mandataire: Ipsilon

(57) **Abrégé**

Vélo (100) comprenant un cadre (1), une roue avant (2), une roue arrière (3) avec roue libre (4), des pédales (7) reliées à la roue arrière (3) par une transmission de mouvement (8) pour entraîner la roue arrière (3) à partir du mouvement des pédales (7), au moins une des roues avant (2) ou arrière (3) étant équipée d'un moteur électrique (13) commandé par une unité de commande (14), le cadre (1) ayant un plateau repose-pieds sous forme de marchepied (9), les pédales (7) solidaires entre elles étant couplées au cadre (1) par une liaison pivot (10) permettant un mouvement oscillant des pédales (7) avec un organe de rappel (11) des pédales (7) en position initiale, un capteur (12) déterminant un paramètre représentatif du mouvement des pédales (7), et l'unité de commande (14) commandant le moteur électrique (13) en fonction des données du capteur (12).

## Description

### Domaine technique

La présente invention concerne le domaine des vélos à assistance électrique. L'invention concerne en particulier un vélo à assistance électrique comprenant des pédales solidaires en déplacement et couplées au cadre du vélo par une liaison pivot.

### Arrière-plan technologique

Dans le domaine des vélos à assistance électrique, le moteur électrique n'est généralement utilisé qu'en soutien à une propulsion mécanique produite par l'utilisateur.

La puissance de cette propulsion mécanique est généralement produite par un pédalier sur lequel l'utilisateur va appliquer une force à l'aide de ses pieds. De nombreux systèmes de pédaliers ont été proposés. Communément, ils comprennent deux pédales mobiles sur lesquelles il faut successivement appuyer pour produire la puissance de la propulsion mécanique. Dans ces pédaliers, l'appui successif est essentiel, car l'appui sur l'une des pédales permet de repositionner l'autre des pédales dans une position permettant un nouvel appui.

Pour le bon fonctionnement de tels pédaliers, il est donc nécessaire de pédaler avec deux pieds. Or, dans certaines situations, par exemple pour de la livraison de courrier, il est peut-être intéressant de pouvoir pédaler avec un seul pied, par exemple lorsque l'utilisateur souhaite rester debout sur une plateforme du vélo pendant le déplacement.

Les documents CN201046742, KR20170055895 et CN215752852 décrivent des vélos électriques.

Il existe ainsi un besoin de disposer d'un vélo à assistance électrique permettant de pédaler avec un ou deux pieds.

### Résumé de l'invention

La présente invention répond à ce besoin grâce à un vélo comprenant au moins un cadre, une roue avant et une roue arrière comprenant une roue libre, un guidon, une selle et des pédales, lesdites pédales étant reliées à la roue arrière par une transmission de mouvement pour un entrainement en rotation de la roue arrière à partir du mouvement des pédales, au moins l'une des roues avant ou arrière étant équipée d'un moteur électrique d'entrainement en rotation, le vélo comprenant une unité de commande configurée pour commander le moteur électrique,
**caractérisé en ce que** le cadre comprend un plateau repose-pieds sous forme d'un marchepied, en ce que les pédales comprennent deux supports de pied s'étendant de part et d'autre d'un plan moyen du vélo, les pédales étant solidaires en déplacement, les pédales étant couplées au cadre par une liaison pivot configurée pour permettre depuis une position initiale des pédales un mouvement oscillant des pédales comprenant un trajet aller des pédales par abaissement des pédales dans le sens d'un rapprochement du marchepied et un trajet retour des pédales en position initiale par élévation des pédales,
en ce que la transmission de mouvement comprend un organe de rappel des pédales en position initiale,
en ce que le vélo comprend un capteur de détermination d'un paramètre représentatif d'un mouvement des pédales,
et en ce que l'unité de commande est configurée pour commander le moteur électrique en fonction des données fournies par le capteur de détermination d'un paramètre représentatif d'un mouvement des pédales.

Par « solidaires en déplacement », on entend que le déplacement de l'une des pédales suivant une direction provoque le déplacement de l'autre des pédales selon la même direction.

Dans la présente invention, du fait que les pédales soient solidaires entre elles, en combinaison avec l'organe de rappel des pédales en position initiale, permet une utilisation du vélo avec deux pieds ou un seul pied, sans que l'absence d'un pied entrave le bon fonctionnement du vélo. En particulier, que l'utilisateur utilise un ou deux pieds, les pédales seront toujours rappelées en position initiale.

Ainsi, le vélo peut être utilisé en position assise avec les deux pieds et en position debout avec un pied sur l'une des pédales et l'autre des pieds sur le marchepied.

La présence du marchepied permet également le déplacement du vélo sans pédaler, l'utilisateur poussant avec un pied contre le sol, l'autre pied restant sur le marchepied, comme avec une trottinette.

En position debout, l'utilisateur peut pédaler avec son pied droit ou son pied gauche en fonction de ses préférences ou d'un handicap sur une des jambes. Dans le cas de déplacement avec des arrêts fréquents (livraisons, courriers), la pose du pied sur le sol peut se faire indépendamment à droite ou à gauche du vélo, l'autre restant sur le marchepied, du fait que les pédales sont solidaires en déplacement et comprennent deux supports de pied s'étendant de part et d'autre d'un plan moyen du vélo. A la remontée sur le vélo, l'absence d'enfourchement du cadre comme sur un vélo classique à pédalier rotatif limite le mouvement nécessaire en hauteur de la jambe et permet de repartir plus vite en pédalant du pied droit ou gauche indifféremment.

En position assise, l'utilisateur peut pédaler selon ses préférences (ou son handicap) avec le pied droit ou le pied gauche. Dans cette position, il est aussi possible de pédaler avec les deux pieds simultanément pour augmenter la pression exercée sur la transmission pour :
- augmenter le couple à la roue, dans une montée par exemple ;
- pour minimiser l'assistance électrique ;
- pour pédaler de façon symétrique des deux jambes afin d'avoir une meilleure stabilité d'évolution.

Selon un mode de réalisation de l'invention, la course verticale des pédales est comprise entre 100 mm et 200 mm, de préférence d'environ 110 mm, entre la position initiale et la position rapprochée du marchepied. Cela permet au vélo selon l'invention d'être utilisable par des personnes de morphologies différentes, notamment avec des tailles comprises entre 1,50 m à 1,85 m, sans réglage particulier du vélo. Cela est particulièrement avantageux par rapport à un vélo classique. En effet, dans un vélo classique à pédalier rotatif, la rotation des pédales demande aux jambes de parcourir de façon alternative une distance égale à l'entraxe des pédales, soit en général 300 à 350 mm en fonction de la longueur des manivelles de pédalier. La hauteur de selle doit donc être systématiquement réglée afin que l'entraxe selle - pédalier soit adapté à la morphologie de la personne pour que ses pieds puissent effectuer la rotation tout en maintenant un contact permanent avec les pédales. Le vélo selon l'invention est donc facilement utilisable dans un environnement familial, professionnel ou locatif.

Selon un mode de réalisation, les pédales s'étendent entre deux plans latéraux du marchepied. Cette position, qui peut être qualifiée de position centrale et non latérale comme sur un vélo à pédalier rotatif, permet une moindre exposition aux obstacles pouvant se présenter sur le chemin.

Selon un mode de réalisation de l'invention, les supports de pied s'étendent au-dessus du marchepied. Ainsi, la garde au sol du vélo est constante peu importe la position des pédales, ce qui limite le risque de chute. En effet, dans un vélo classique à pédalier rotatif, la garde au sol varie en fonction de la position des pédales, ce qui peut occasionner des chutes, par exemple dans un virage.

Selon un mode de réalisation de l'invention, la transmission de mouvement comprend un lien comprenant une portion s'étendant entre les pédales et la roue libre.

Selon un mode de réalisation de l'invention, la roue libre comprend un pignon, et en ce que le lien comprend une chaîne à rouleaux engagée sur le pignon, un premier câble ou une première courroie reliée à la chaîne à rouleaux et aux pédales et un deuxième câble ou une deuxième courroie relié à la chaîne à rouleaux et à l'organe de rappel.

Selon un mode de réalisation de l'invention, la roue libre comprend une poulie, le lien étant une courroie engagée sur la poulie. La poulie est de préférence une poulie dentée, la courroie étant de préférence une courroie crantée.

Selon un mode de réalisation de l'invention, la transmission de mouvement comprend au moins une poulie d'angle entre les pédales et la roue libre configurée pour modifier la direction d'extension du lien au passage de la poulie d'angle.

La force de rappel des pédales en position initiale de l'organe de rappel est de préférence transmise aux pédales via le lien.

Selon un mode de réalisation de l'invention, le lien comprend une première extrémité reliée aux pédales et une deuxième extrémité reliée à l'organe de rappel.

Selon un mode de réalisation de l'invention, les deux supports de pied sont reliés au cadre par un châssis, ladite liaison pivot étant disposée entre le châssis et le cadre.

Selon un mode de réalisation de l'invention, le châssis comprend une extrémité supérieure avant, une extrémité supérieure arrière et une extrémité inférieure, les supports de pied étant reliés au châssis au niveau de l'extrémité supérieure arrière, ladite liaison pivot reliant le châssis au niveau de l'extrémité supérieure avant.

Selon un mode de réalisation de l'invention, le châssis comprend deux segments reliés entre eux formant un V ouvert vers le bas, la jonction entre les segments formant l'extrémité supérieure avant, une extrémité dite libre de l'un des segments opposée à l'extrémité du segment reliée à l'autre segment pour former la pointe du V formant l'extrémité supérieure arrière, l'extrémité libre en regard de l'autre des segments formant l'extrémité inférieure.

Selon un mode de réalisation de l'invention, le châssis comprend deux segments reliés entre eux formant un V ouvert vers le haut, une extrémité dite libre de l'un des segments opposée à l'extrémité du segment reliée à l'autre segment pour former la pointe du V formant l'extrémité supérieure avant, l'extrémité libre en regard de l'autre des segments formant l'extrémité supérieure arrière.

Le châssis peut présenter une forme en Y. Le châssis en Y présente comme avantage par rapport à un châssis en V une plus grande liberté pour poser un ou deux pieds. En effet, le segment qui relie les supports de pédales à la liaison pivot peut gêner le positionnement des pieds. Le châssis en Y est également plus léger car plus économe en matière pour être fabriqué. Néanmoins, dans le cas d'une utilisation avec des sollicitations mécaniques importantes, la flexion engendrée sur les segments portant les supports de pied du fait du bras de levier est mieux supportée par une réalisation avec un châssis en V.

Selon un mode de réalisation de l'invention, la première extrémité du lien est reliée à l'extrémité inférieure du châssis.

Selon un mode de réalisation de l'invention, la roue libre est dans un état engagé lors de l'abaissement des pédales et la roue libre est dans un état libre lors de l'élévation des pédales.

Par « état engagé », on entend que le mécanisme de la roue libre est activé, permettant la transmission du mouvement entre la transmission de mouvement et la roue arrière.

Par « état libre », on entend que mécanisme de la roue libre est désactivé, permettant à la roue arrière de tourner indépendamment de la transmission du mouvement.

Selon un mode de réalisation de l'invention, l'organe de rappel est disposé sous le marchepied.

Selon un mode de réalisation de l'invention, le marchepied comprend une découpe permettant le passage d'au moins une portion des pédales lors du mouvement oscillant des pédales.

Selon un mode de réalisation de l'invention, le vélo comprend au moins un organe rotatif sensible à un déplacement des pédales, le vélo comprenant un capteur de mouvement dudit organe rotatif configuré pour détecter une rotation de l'organe rotatif et pour déterminer le sens de rotation de l'organe rotatif, le capteur de détermination d'un paramètre représentatif d'un mouvement des pédales étant formé par le capteur de mouvement de l'organe rotatif.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[fig. 1] illustre, en vue de côté, de manière schématique, un exemple de vélo selon l'invention, les pédales étant en position initiale ;
[fig. 2] est une vue similaire à celle de la figure 1, dans laquelle les pédales sont dans une position rapprochée ;
[fig. 3] illustre, en vue de côté, de manière schématique, un autre exemple de vélo selon l'invention, les pédales étant en position initiale ;
[fig. 4] est une vue similaire à celle de la figure 3, dans laquelle les pédales sont dans une position rapprochée ;
[fig. 5] est une vue partielle en perspective au niveau des pédales d'un vélo selon l'invention, dans laquelle les pédales sont dans une position initiale ; et
[fig. 6] est une vue similaire à celle de la figure 4, illustrant une variante de vélo selon l'invention, dans laquelle les pédales sont dans une position rapprochée.

### Description de mode(s) de réalisation

Dans la suite de la description, les éléments identiques ou de fonctions identiques portent le même signe de référence. A des fins de concision de la présente description, ils ne sont pas décrits en regard de chacune des figures, seules les différences étant décrites.

Sur les figures, les proportions réelles n'ont pas toujours été respectées, dans un souci de clarté.

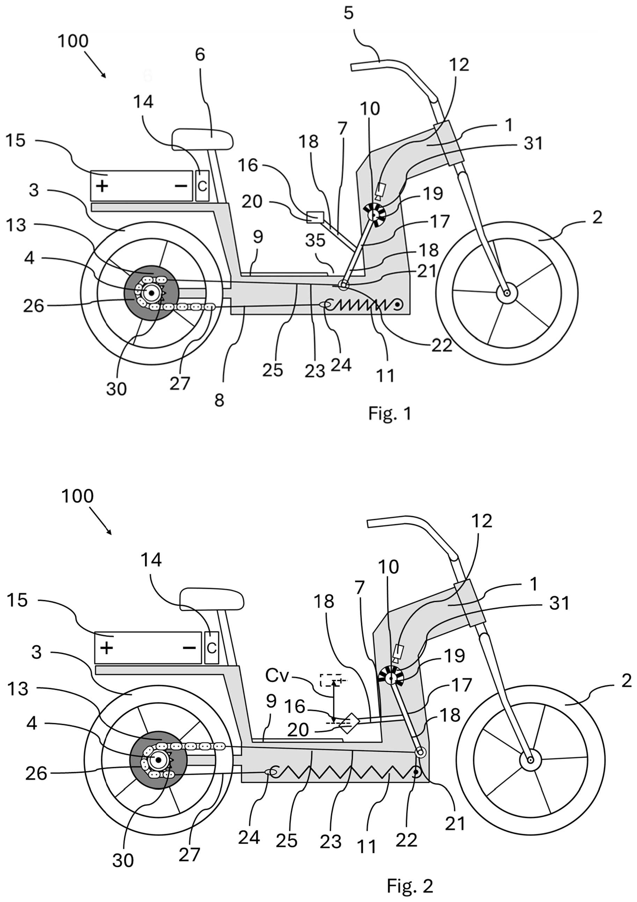

On a illustré sur les figures 1 et 2 un exemple de vélo 100 selon l'invention.

Le vélo 100 comprend un cadre 1 sur lequel sont montées une roue avant 2, une roue arrière 3, un guidon 5 et une selle 6.

La roue arrière 3 comprend, autour de son axe de rotation, une roue libre 4 et un moteur électrique 13 d'entrainement en rotation. Le moteur électrique 13 peut être installé dans le moyeu de la roue arrière 3.

Le vélo 100 comprend en outre une batterie 15 d'alimentation du moteur électrique 13 une unité de commande 14 configurée pour commander le moteur électrique 13.

Le cadre 1 comprend un plateau repose-pieds sous forme d'un marchepied 9. Le marchepied 9 est positionné entre la roue arrière 3 et la roue avant 2 suivant un axe s'étendant entre la roue arrière 3 et la roue avant 2.

Le marchepied 9 se situe en avant de la selle 6 dans une partie basse du vélo 100.

Le vélo 100 comprend également des pédales 7 reliées à la roue arrière 3 par une transmission de mouvement 8 pour un entrainement en rotation de la roue arrière 3 à partir du mouvement des pédales 7.

Les pédales 7 sont formées par deux supports de pied 16 reliés à un châssis 17.

Le châssis 17 comprend deux segments 18 reliés entre eux et formant un V ouvert vers le haut. Une extrémité dite libre de l'un des segments 18 opposés à l'extrémité du segment 18 reliée à l'autre segment 18 pour former la pointe du V forme une extrémité supérieure avant 19. L'extrémité libre en regard de l'autre des segments 18 forme une extrémité arrière 20.

Dans cet exemple, le châssis 17 présente une forme en Y, la pointe basse du Y formant une extrémité inférieure 21.

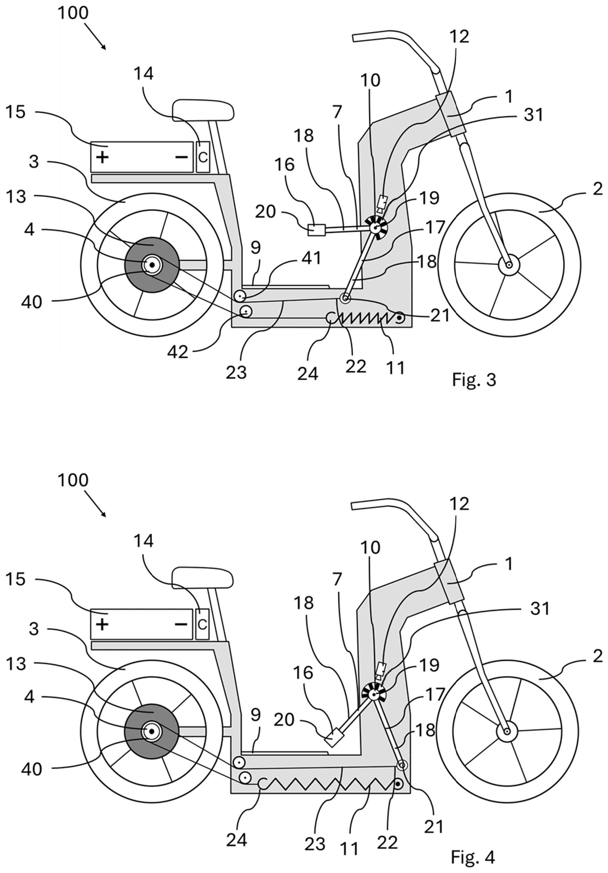

Dans une variante, illustrée sur les figures 3 et 4, le châssis 17 comprend deux segments 18 reliés entre eux et formant un V ouvert vers le bas. La jonction entre les segments 18 pour former la pointe du V forme une extrémité supérieure avant 19 du châssis 17. Une extrémité dite libre de l'un des segments 18 opposés à l'extrémité du segment 18 reliée à l'autre segment 18 forme une extrémité supérieure arrière 20. L'extrémité libre en regard de l'autre des segments 18 forme une extrémité inférieure 21.

L'un au moins des segments 18 peut être formé par un profilé métallique.

Les supports de pied 16 sont reliés au châssis 17 au niveau de l'extrémité supérieure arrière 20.

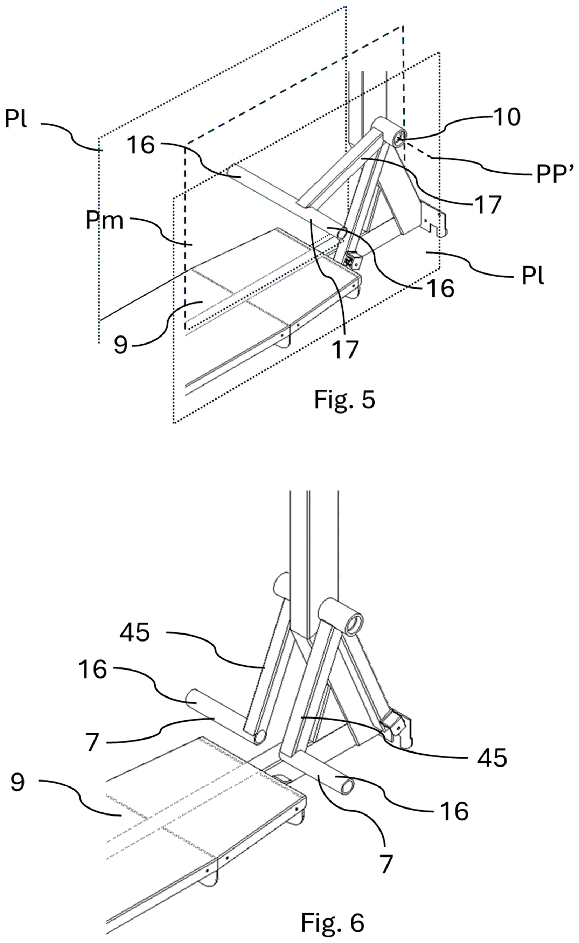

Comme illustré sur la vue de la figure 5, les supports de pied 16 s'étendent de part et d'autre d'un plan moyen Pm du vélo 100 au-dessus du marchepied 9. De plus, les pédales 7 s'étendent entre deux plans latéraux PI du marchepied 9.

Chaque support de pied 16 peut être formé par un tube s'étendant perpendiculaire à l'axe PP' de pivotement des pédales 7 autour de la liaison pivot 10.

Par exemple, le châssis 17 peut être déporté d'un côté du plan moyen Pm. Dans ce cas, la longueur d'un des supports de pied 16 peut être supérieure à la longueur de l'autre des supports de pied 16.

Le châssis 17 est couplé au cadre 1 par une liaison pivot 10, ladite liaison pivot 10 reliant le châssis 17 au niveau de l'extrémité supérieure avant 19.

La liaison pivot 10 est configurée pour permettre depuis une position initiale, des pédales 7 illustrée sur la figure 1, un mouvement oscillant des pédales 7 comprenant un trajet aller des pédales 7 par abaissement des pédales 7 dans le sens d'un rapprochement du marchepied 9, comme illustré sur la figure 2, et un trajet retour des pédales 7 en position initiale par élévation des pédales 7.

La course verticale Cv des pédales 7 est comprise entre 100 mm et 200 mm, de préférence d'environ 110 mm, entre la position initiale et la position rapprochée du marchepied 9.

Le marchepied 9 peut comprendre une découpe 35 permettant le passage d'au moins une portion des pédales 7 lors du mouvement oscillant des pédales 7.

L'extrémité inférieure 21 du châssis 17 est reliée à une première extrémité 22 d'un lien 23 de la transmission de mouvement 8.

Une deuxième extrémité 24 du lien 23 est reliée à un organe de rappel 11 des pédales 7 en position initiale, dans cet exemple formé par un ressort relié au cadre 1 et au lien 23.

En particulier, dans le mode de réalisation des figures 1 et 2, le lien 23 comprend un premier câble 25, formant la première extrémité 22, relié à une extrémité d'une chaîne à rouleaux 26, une autre extrémité de la chaîne à rouleaux 26 étant reliée à un deuxième câble 27 formant la deuxième extrémité 24 du lien 23.

Comme le premier câble 25 forme la première extrémité 22 du lien 23, le premier câble 25 est relié aux pédales 7. De même, comme le deuxième câble 27 forme la deuxième extrémité 24 du lien 23, le deuxième câble 27 est relié à l'organe de rappel 11.

La chaîne à rouleaux 26 est engagée avec un pignon 30 de la roue libre 4. Ainsi, la chaîne à rouleaux 26 permet de transmettre un déplacement du lien 23 à la roue libre 4.

Entre les pédales 7 et la roue arrière 3, le lien 23 s'étend sensiblement linéairement selon une direction allant de la roue avant 2 vers la roue arrière 3 puis, autour de la roue libre 4, le lien 23 est courbe puis, entre la roue arrière 3 et l'organe de rappel 11, le lien 23 s'étend sensiblement linéairement selon une direction allant de la roue arrière 3 vers la roue avant 2.

Dans le mode de réalisation des figures 3 et 4, le lien 23 est formé par une courroie, notamment une courroie crantée. La courroie est engagée sur une poulie 40, notamment dentée, de la roue libre 4. L'utilisation d'une courroie présente l'avantage d'être peu coûteuse, de faciliter le montage du lien 23 et son entretien, sans que la transmission de mouvement 8 perde en fiabilité.

Toujours dans le mode de réalisation des figures 3 et 4, la transmission de mouvement 8 comprend une première poulie d'angle 41 entre les pédales 7 et la roue libre 4 et une deuxième poulie d'angle 42 entre la roue libre 4 et l'organe de rappel 11. Les poulies d'angle 41 et 42 permettent de modifier la direction d'extension du lien 23 au passage des poulies d'angle 41 et 42. En particulier, la poulie d'angle 41 permet de faire passer la direction du lien 23 entre une direction sensiblement parallèle à un axe s'étendant entre la roue avant 2 et la roue arrière 3, à une direction à pente montante depuis le marchepied 9 vers la roue libre 4. La poulie d'angle 42 permet de faire passer la direction du lien 23 entre une direction à pente descendante depuis la roue libre 4 vers le marchepied 9 à une direction sensiblement parallèle à un axe s'étendant entre la roue arrière 3 et la roue avant 2.

L'utilisation de deux poulies d'angle 41 et 42 permet de rapprocher le marchepied 9 du sol ce qui facilite l'installation d'une personne sur le vélo 100, notamment une personne à mobilité réduite.

Avantageusement, l'organe de rappel 11 est disposé sous le marchepied 9. En variante, l'organe de rappel 11 peut être disposé dans le cadre 1, dans une partie verticale avant, ou dans le montant du support de la selle 6.

Le vélo 100 comprend également un organe rotatif 31 sensible à un déplacement des pédales 7. Dans cet exemple, l'organe rotatif 31 est formé par un demi-disque codeur comprenant une alternance de secteurs de disque d'une première couleur, notamment blanche, et de secteurs de disque d'une deuxième couleur, notamment noir.

Le vélo 100 comprend un capteur 12 de détermination d'un paramètre représentatif d'un mouvement des pédales 7. Ce capteur 12 est formé d'un capteur de mouvement dudit organe rotatif 31 configuré pour détecter une rotation de l'organe rotatif 31 et pour déterminer le sens de rotation de l'organe rotatif 31. Ce capteur 12 est par exemple formé par capteur à effet Hall, l'organe rotatif 31 étant une roue aimantée, et d'une électronique de traitement configurée pour convertir les signaux magnétiques en données indiquant la rotation et le sens de rotation de l'organe rotatif 31. En variante, le capteur 12 est formé par une caméra optique orientée vers l'organe rotatif 31 et d'une électronique de traitement configurée pour convertir les signaux optiques de la caméra en données indiquant la rotation et le sens de rotation de l'organe rotatif 31.

L'unité de commande 14 est configurée pour commander le moteur électrique 13 en fonction de ces données fournies par le capteur 12 de détermination d'un paramètre représentatif d'un mouvement des pédales 7.

Lors de l'utilisation du vélo 100, en partant de la position initiale, l'utilisateur va appliquer une force avec un ou deux pieds sur les supports de pied 16 pour abaisser les pédales 7 dans le sens d'un rapprochement du marchepied 9.

Cet abaissement des pédales se fait par une rotation des pédales 7 autour de la liaison pivot 10. La rotation provoque un déplacement de l'extrémité inférieure 21 du châssis 17 des pédales 7 selon une direction s'étendant sensiblement depuis la roue arrière 3 vers la roue avant 2. Ce déplacement provoque une traction sur le lien 23 au niveau de sa première extrémité 22 qui est reliée à l'extrémité inférieure 21. Cette traction permet de déplacer le lien 23. En particulier, la chaîne à rouleaux 26 engagée sur le pignon 30 entraine en rotation la roue libre 4 dans un premier sens dans lequel la roue libre 4 est dans un état engagé.

L'abaissement des pédales 7 permet ainsi de transmettre de la puissance motrice à la roue arrière 3.

De plus, grâce aux données représentatives d'un mouvement des pédales 7 fournies par le capteur 12, l'unité de commande 14 commande le moteur électrique 13 pour fournir une assistance électrique pour aider au déplacement du vélo 100.

Lors de l'abaissement des pédales 7, et du déplacement du lien 23, l'organe de rappel 11 est mis en tension par l'action de traction du lien 23 par la deuxième extrémité 24 fixée sur l'organe de rappel 11. Dans cet exemple, cette mise en tension se fait par un allongement du ressort de l'organe de rappel 11.

Lorsque l'utilisateur stoppe l'application de pression sur les pédales 7, l'organe de rappel 11 va exercer une traction sur la deuxième extrémité 24 du lien 23 pour le déplacer. Cette traction va provoquer une traction par l'extrémité 22 du lien 23 sur l'extrémité inférieure 21 du châssis 17 des pédales 7 de sorte à provoquer une élévation des pédales 7 vers la position initiale. Cette élévation des pédales 7 se fait par une rotation des pédales 7 autour de la liaison pivot 10.

Le mouvement du lien 23 provoque le déplacement de la chaîne à rouleaux 26 engagée sur le pignon 30 et entraine en rotation la roue libre 4 dans un deuxième sens dans lequel la roue libre 4 est dans un état libre.

De plus, grâce aux données représentatives d'un mouvement des pédales 7 du capteur 12, l'unité de commande 14 stoppe l'assistance du moteur électrique 13. Ainsi, l'assistance électrique pour aider au déplacement du vélo 100 ne se fait que lorsque l'utilisateur transmet de la puissance à la roue arrière 3.

Dans une variante illustrée sur la figure 6, chaque support de pied 16 peut comprendre un châssis propre 45, les deux châssis propres 45 étant reliés à la même liaison pivot 10 de sorte que les pédales 7 soient solidaires en déplacement.

L'un des châssis propre 45 à une forme similaire au châssis 17 de l'un des modes de réalisation des figures 1 à 4. L'autre des châssis 45 est par exemple formé par un unique profilé.

## Revendications

1. Vélo (100) comprenant au moins un cadre (1), une roue avant (2) et une roue arrière (3) comprenant une roue libre (4), un guidon (5), une selle (6) et des pédales (7), lesdites pédales (7) étant reliées à la roue arrière (3) par une transmission de mouvement (8) pour un entrainement en rotation de la roue arrière (3) à partir du mouvement des pédales (7), au moins l'une des roues avant (2) ou arrière (3) étant équipée d'un moteur électrique (13) d'entrainement en rotation, le vélo (100) comprenant une unité de commande (14) configurée pour commander le moteur électrique (13),
**caractérisé en ce que** le cadre (1) comprend un plateau repose-pieds sous forme d'un marchepied (9), **en ce que** les pédales (7) comprennent deux supports de pied (16) s'étendant de part et d'autre d'un plan moyen (Pm) du vélo (100), les pédales (7) étant solidaires en déplacement, les pédales (7) étant couplées au cadre (1) par une liaison pivot (10) configurée pour permettre depuis une position initiale des pédales (7) un mouvement oscillant des pédales (7) comprenant un trajet aller des pédales (7) par abaissement des pédales (7) dans le sens d'un rapprochement du marchepied (9) et un trajet retour des pédales (7) en position initiale par élévation des pédales (7),
**en ce que** la transmission de mouvement (8) comprend un organe de rappel (11) des pédales (7) en position initiale,
**en ce que** le vélo (100) comprend un capteur (12) de détermination d'un paramètre représentatif d'un mouvement des pédales (7),
et **en ce que** l'unité de commande (14) est configurée pour commander le moteur électrique (13) en fonction des données fournies par le capteur (12) de détermination d'un paramètre représentatif d'un mouvement des pédales (7).

2. Vélo (100) selon la revendication 1, **caractérisé en ce que** la transmission de mouvement (8) comprend un lien (23) comprenant une portion s'étendant entre les pédales (7) et la roue libre (4).

3. Vélo (100) selon la revendication précédente, **caractérisé en ce que** la roue libre (4) comprend un pignon (30), et **en ce que** le lien (23) comprend une chaîne à rouleaux (26) engagée sur le pignon (30), un premier câble (25) ou une première courroie reliée à la chaîne à rouleaux (26) et aux pédales (7) et un deuxième câble (27) ou une deuxième courroie relié à la chaîne à rouleaux (26) et à l'organe de rappel (11).

4. Vélo (100) selon la revendication 2, **caractérisé en ce que** la roue libre (4) comprend une poulie (40), le lien (23) étant une courroie engagée sur la poulie (40).

5. Vélo (100) selon l'une quelconque des revendications 2 à 4, **caractérisé en ce que** le lien (23) comprend une première extrémité (22) reliée aux pédales (7) et une deuxième extrémité (24) reliée à l'organe de rappel (11).

6. Vélo (100) selon l'une quelconque des revendications 2 à 5, **caractérisé en ce que** la transmission de mouvement (8) comprend au moins une poulie d'angle (41) entre les pédales (7) et la roue libre (4) configurée pour modifier la direction d'extension du lien (23) au passage de la poulie d'angle (41).

7. Vélo (100) selon l'une quelconque des revendications précédentes, **caractérisé en ce que** les supports de pied (16) sont reliés au cadre (1) par un châssis (17), ladite liaison pivot (10) étant disposée entre le châssis (17) et le cadre (1).

8. Vélo (100) selon la revendication précédente, **caractérisé en ce que** le châssis (17) comprend une extrémité supérieure avant (19), une extrémité supérieure arrière (20) et une extrémité inférieure (21), les supports de pied (16) étant reliés au châssis (17) au niveau de l'extrémité supérieure arrière (20), ladite liaison pivot (10) reliant le châssis (17) au niveau de l'extrémité supérieure avant (19).

9. Vélo (100) selon la revendication précédente, **caractérisé en ce que** le châssis (17) comprend deux segments (18) reliés entre eux formant un V ouvert vers le bas, la jonction entre les segments formant l'extrémité supérieure avant (19), une extrémité dite libre de l'un des segments (18) opposée à l'extrémité du segment (18) reliée à l'autre segment (18) pour former la pointe du V formant l'extrémité supérieure arrière (20), l'extrémité libre en regard de l'autre des segments (18) formant l'extrémité inférieure (21).

10. Vélo (100) selon la revendication 8, **caractérisé en ce que** le châssis (17) comprend deux segments (18) reliés entre eux formant un V ouvert vers le haut, une extrémité dite libre de l'un des segments (18) opposée à l'extrémité du segment (18) reliée à l'autre segment (18) pour former la pointe du V formant l'extrémité supérieure avant (19), l'extrémité libre en regard de l'autre des segments (18) formant l'extrémité supérieure arrière (20).

11. Vélo (100) selon l'une quelconque des revendications 8 à 10, en combinaison avec la revendication 5, **caractérisé en ce que** la première extrémité (22) du lien (23) est reliée à l'extrémité inférieure (21) du châssis (17).

12. Vélo (100) selon l'une quelconque des revendications précédentes, **caractérisé en ce que** la roue libre (4) est dans un état engagé lors de l'abaissement des pédales (7) et **en ce que** la roue libre (4) est dans un état libre lors de l'élévation des pédales (7).

13. Vélo (100) selon l'une quelconque des revendications précédentes, caractérisé en la course verticale (Cv) des pédales (7) est comprise entre 100 mm et 200 mm, de préférence d'environ 110 mm, entre la position initiale et la position rapprochée du marchepied (9).

14. Vélo (100) selon l'une quelconque des revendications précédentes, **caractérisé en ce que** les pédales (7) s'étendent entre deux plans latéraux (PI) du marchepied (9).

15. Vélo (100) selon l'une quelconque des revendications précédentes, **caractérisé en ce qu'**il comprend au moins un organe rotatif (31) sensible à un déplacement des pédales (7), le vélo (100) comprenant un capteur de mouvement dudit organe rotatif (31) configuré pour détecter une rotation de l'organe rotatif (31) et pour déterminer le sens de rotation de l'organe rotatif (31), le capteur (12) de détermination d'un paramètre représentatif d'un mouvement des pédales (7) étant formé par le capteur de mouvement de l'organe rotatif (31).
